# EUROPEAN PATENT APPLICATION

(11) **EP 1 841 135 A1**
(43) Date of publication of application: **03.10.2007**
(21) Application number: 06006849.1
(22) Date of filing: 31.03.2006
(51) Int. Cl.: H04L 12/28

(54) **System for home-installed data transmission**

(71) Applicant: SONY DEUTSCHLAND GMBH, 10785 Berlin (DE)
(72) Inventor: Löbbert, Johannes, 70771 Leinfelden-Echterdingen (DE); Mosig, Rüdiger c/o Stuttgart Technology Center, 70327 Stuttgart (DE); Hagg, Wilhelm c/o Stuttgart Technology Center, 70327 Stuttgart (DE)
(74) Representative: Müller - Hoffmann & Partner

(57) **Abstract**

Data transmission system for home-installed data transmission, in particular for home networks or the like, within a building (B) is provided, comprising at least one home-installed data source device or home-installed transmitting device (TD), at least one home-installed data sink device or home-installed receiving device (RD), and at least one home-installed connecting device (CD) for connecting said data source device or transmitting device and said data sink device or transmitting device for data transmission from said data source device or transmitting device to said data sink device or receiving device, wherein home-installed conveying lines/pipes (P) are provided as said connecting device (CD) and wherein said conveying lines/pipes (P) are pre-installed within said building (B).

## Description

### Technical Field

The present invention relates to a data transmission system for home-installed data transmission, in particular for home networks or the like, and in particular to a method and/or a system for broadband data transmission in home installations.

### Summary of the Invention

The invention describes methods and devices to use existing home installations like water and heat pipes for high bandwidth data transmissions.

### Technical Background

The technical background relates to:
- Wireless data transmission methods (Ultra Wide Band/802.11),
- Cable based data transmission methods (Ethernet/ CATn cables), and
- Power line based communication (PowerLine / HomePlug).

### Problem and Object

Provision of a reliable and easy data transmission means having broadband data transmission capabilities, in particular for home installations and home networks

Future in-home multimedia applications require broadband data transmission capabilities. To provide the required connectivity short-range wireless technologies, such as ultra wide band, will be used for intra-room transmissions. But due to the limited range of wireless technologies and since some home building materials block wireless broadband transmissions, additional wired connections must be installed for inter-room communications. But installing data wires in existing houses between rooms might only be accomplished with high effort or might even forbidden in very old buildings.

Power line based mechanism use the installed power lines to transmit data. But switching on and off power consumer in the house has strong impact on the signal quality on the cable and reduces the available bandwidth. Furthermore the data transmission depends very much on the power line topology which changes dynamically by switching on and off devices. This requires a dynamic adaptation of the transmission scene. Other problems are stub lines which are acting as unintended antennas

### Solution

The invention proposes to use water pipes and/or heating pipes which are installed in buildings to convey water for water supply as drinking water or as water for heating devices as means for transmitting data with a high bandwidth between a transmitting home-installed device and a receiving home-installed device. The invention is based on the assumption that a substantial part of the respective pipe is in each case based on an electrical conductor. Between each of said transmitter and said receiver and the transmitting pipe a so-called pipeline interface is necessary to enable a respective data signal extraction and/or to avoid an electrical shortcut in the case of a ring topology of the pipe system.

Instead of installing additional data wires, the invention proposes the use of existing in-house infrastructure. But instead of modulating the signal on the power lines, the heating and water pipes are used as transmission medium.

As with power line, the method uses existing installation and can be used with minimal effort.

Since the pipes are currently not used to transmit signals, but only water, the signal quality and available bandwidth is significantly higher. The invention uses heating pipes, since in colder regions all rooms are equipped with one or more radiators and connected via heat pipes. That's why each room can be equipped with a device to bridge between existing intra-room wired or wireless networks and the pipe based inter-room communication.

Heating pipes are made either out of copper or consist of layers of plastics surrounding a metal tube. The metal layer or the entire tube will be used as transmission medium.

The following figure shows an example topology in which a data source is transmitting information such as a high definition video stream via an conventional wired or wireless medium to the PipeLine interface of the room. The PipeLine interface sends the data via the heating pipe to other PipeLine interfaces, which forward the data again via a wired or wireless medium to the data sink in another room. This principle also applies to parallel (or mixed) radiator installation where the radiators are connected in parallel rather then the serial scenario shown in the figure.

In order to avoid an electrical shortcut due to the ring topology the heat pipe may be electrically isolated at one point.

Optionally the radiators could be used as antennas by selecting appropriate frequencies for data transmission. At least stationary devices like TV sets could integrate such a large antenna that automatically connects the device to the home network for streaming and general data transmission.

### Advantages

The main features and advantages of the invention are
- reliable data transmissions between rooms independent on the building material,
- no need to install additional cables between rooms, and
- significantly less interference on the transmissions medium than in power line based systems.

The transmission of multimedia broadband signals over heat pipes requires high frequency signals in conjunction with a state of the art modulation scheme such as OFDM (Orthogonal Frequency Division Multiplex) or Spread Spectrum. Such high frequencies can not easily be transmitted on a standard conductor due to high attenuation values caused mainly by irradiation. A very efficient way of transferring high frequency signals is to use coaxial cable as well as hollow conductors.

The attenuation of an RF signal on a hollow conductor is very low and thus a very efficient transmission of the RF signal is possible. This enables to transfer high data rate signals over pipes for transporting fluid media like heat pipes, water pipes or gas pipes.

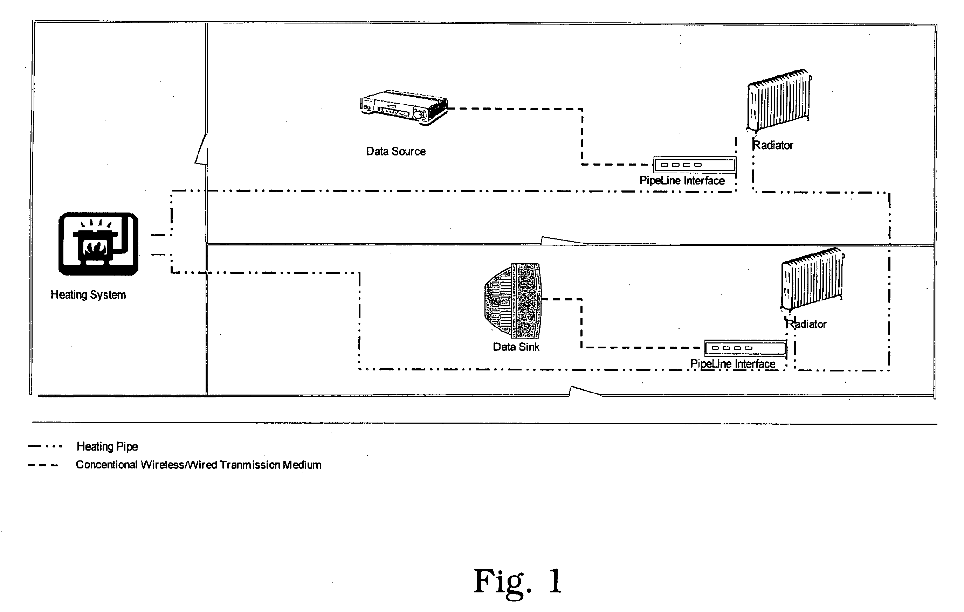

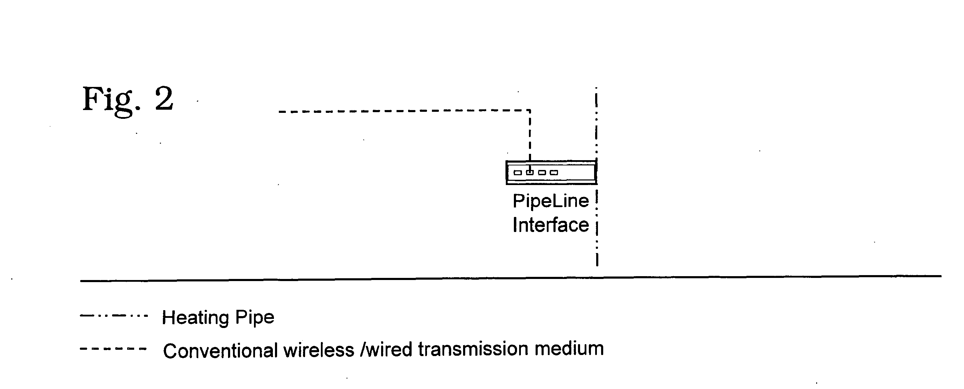

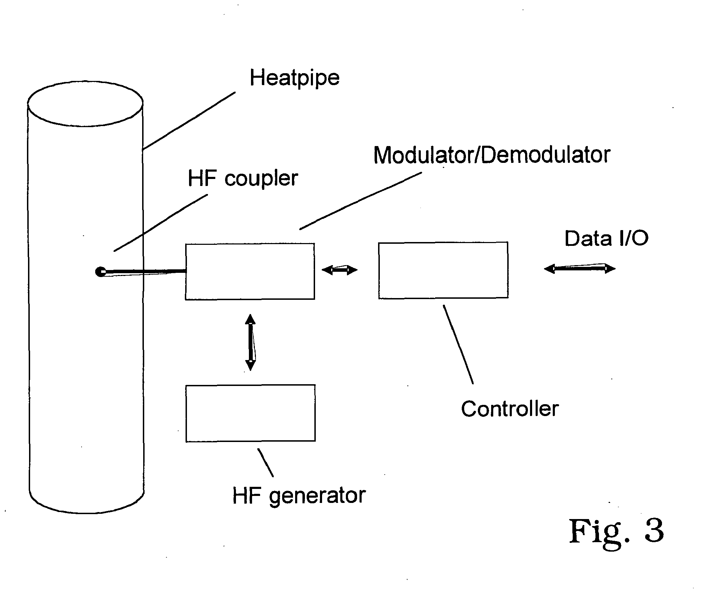

A preferred embodiment is shown in Fig. 3. A controller is transmitting data by sending the data to a modulator. The modulator applies a modulation scheme to an RF signal that is generated by an RF generator. The modulated signal is then injected into a hollow conductor, in the present embodiment a heat pipe, by the RF coupler for the transmission of the RF signal over the heat pipe.

On the receiving side, a demodulator which can be a separate functional unit or can be implemented together with the modulator in one unit as in the present embodiment demodulates the RF signal and sends the result to the controller for further processing.

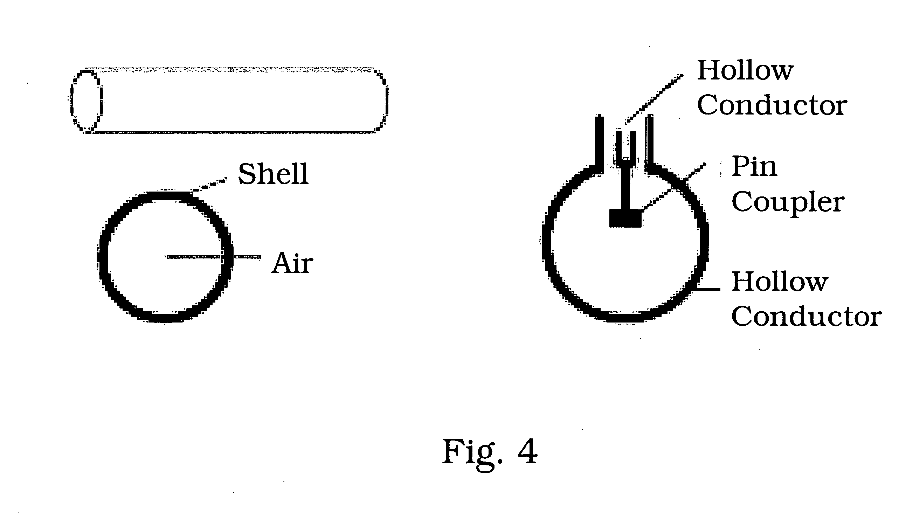

An example of an RF coupler is shown in Fig. 4. In the left part of Fig. 4, a hollow conductor (e.g. a heat pipe) is illustrated in a side view (top) and a sectional view (bottom). In the present example, the hollow conductor contains only air but in the case of a heat or water pipe, the hollow conductor may also contain water.

In the right part of Fig. 4, it is illustrated how the HF signal can be fed into the hollow conductor. The hollow conductor (Hohlleiter) comprises a hole in which a pin coupler (Stiftkoppler) is arranged. At the external side of the conductor, the pin coupler comprises a co-axial connector in order to transfer of the µ wave in/out of the hollow conductor. However, this transfer can be accomplished in alternative ways known by a person skilled in the art of hollow conductors and the propagation, lead-in and lead-out of µ signals.

The present invention can also be described according to the following:

The present inevnetion provides a data transmission system for home-installed data transmission, in particular for home networks or the like, within a building B, comprising at least one home-installed data source device or home-installed transmitting device TD, at least one home-installed data sink device or home-installed receiving device RD, and at least one home-installed connecting device CD. for connecting said data source device or transmitting device and said data sink device or transmitting device for data transmission from said data source device or transmitting device to said data sink device or receiving device, wherein home-installed conveying lines/pipes P are provided as said connecting device CD and wherein said conveying lines/pipes P are pre-installed within said building B.

Said conveying lines/pipes P may be water pipes.

Said conveying lines/pipes P may be heating pipes.

An interface device ITD, IRD may be provided between said data source device or transmitting device TD and said connecting device CD and/or between said data sink device or receiving device RD and said connecting device CD.

Said interface device ITD, IRD may be adapted for avoiding an electrical short-cut in the case of a ring topology of the connecting device CD.

Said interface device ITD, IRD may be adapted for feeding data to be transmitted into the connecting device CD and/or for extracting data transmitted via said connecting device CD from said connecting device CD.

Said interface device ITD, IRD may be adapted for the transmission of high frequency signals into the connecting device CD and/or for extraction of high frequency signals from said connecting device CD.

Said interface device ITD, IRD may comprise an RF coupling means for feeding/ extracting an RF signal into/ out of said connecting device CD.

Said connecting device CD may comprise a hole essentially in which a pin coupling means is arranged.

Essentially at the external side of the conductor, said pin coupling means may comprise a co-axial connecting means for transferring said RF signal in and/or out of the connecting device CD.

## Claims

1. Data transmission system for home-installed data transmission, in particular for home networks or the like, within a building (B), comprising:
- at least one home-installed data source device or home-installed transmitting device (TD),
- at least one home-installed data sink device or home-installed receiving device (RD), and
- at least one home-installed connecting device (CD) for connecting said data source device or transmitting device and said data sink device or transmitting device for data transmission from said data source device or transmitting device to said data sink device or receiving device,
- wherein home-installed conveying lines/pipes (P) are provided as said connecting device (CD) and
- wherein said conveying lines/pipes (P) are pre-installed within said building (B).

2. Data transmission system according to claim 1,
wherein said conveying lines/pipes (P) are water pipes.

3. Data transmission system according to any one of the preceding claims,
wherein said conveying lines/pipes (P) are heating pipes.

4. Data transmission system according to any one of the preceding claims,
wherein an interface device (ITD, IRD) is provided between said data source device or transmitting device (TD) and said connecting device (CD) and/or between said data sink device or receiving device (RD) and said connecting device (CD).

5. Data transmission system according to claim 4,
wherein said interface device (ITD, IRD) is adapted for avoiding an electrical short-cut in the case of a ring topology of the connecting device (CD).

6. Data transmission system according to any one of the preceding claims 4 or 5,
wherein said interface device (ITD, IRD) is adapted for feeding data to be transmitted into the connecting device (CD) and/or for extracting data transmitted via said connecting device (CD) from said connecting device (CD).

7. Data transmission system according to any one of the preceding claims,
wherein said interface device (ITD, IRD) is adapted for the transmission of high frequency signals into the connecting device (CD) and/or for extraction of high frequency signals from said connecting device (CD).

8. Data transmission system according to claim 7,
wherein said interface device (ITD, IRD) comprises an RF coupling means for feeding/extracting an RF signal into/out of said connecting device (CD).

9. Data transmission system according to claim 8,
wherein said connecting device (CD) comprises a hole essentially in which a pin coupling means is arranged.

10. Data transmission system according to claim 9,
wherein essentially at the external side of the conductor, said pin coupling means comprises a co-axial connecting means for transferring said RF signal in and/or out of the connecting device (CD).
